## Europäisches Patentamt
## European Patent Office
## Office européen des brevets

(11) Veröffentlichungsnummer: **0 445 575 B1**

(12)

# EUROPÄISCHE PATENTSCHRIFT

(45) Veröffentlichungstag der Patentschrift: **21.06.95**

(51) Int. Cl.6: **B60T 8/26**

(21) Anmeldenummer: **91102378.6**

(22) Anmeldetag: **20.02.91**

(54) **Verfahren zur Bremsdruckverteilung auf die Achsen eines Kraftfahrzeugs mit ABS-Druckmittelbremse.**

(30) Priorität: **08.03.90 DE 4007360**

(43) Veröffentlichungstag der Anmeldung:
**11.09.91 Patentblatt 91/37**

(45) Bekanntmachung des Hinweises auf die Patenterteilung:
**21.06.95 Patentblatt 95/25**

(84) Benannte Vertragsstaaten:
**DE FR GB IT NL SE**

(56) Entgegenhaltungen:
**EP-A- 0 173 954**
**DE-A- 3 829 951**

(73) Patentinhaber: **MERCEDES-BENZ AG**
**Mercedesstrasse 136**
**D-70327 Stuttgart (DE)**

(72) Erfinder: **Töpfer, Bernhard, Dr.**
**Im Weingarten 41**
**W-7000 Stuttgart 60 (DE)**
Erfinder: **Millner, Norman, Dr.**
**Krautgartenstrasse 26**
**W-7000 Stuttgart 61 (DE)**
Erfinder: **Aminpour, Ali**
**Salierstrasse 20**
**W-7050 Waiblingen (DE)**
Erfinder: **Scheer, Wolfgang**
**Landauer Strasse 44**
**W-7000 Stuttgart 31 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung geht aus von einem Verfahren zur Bremsdruckverteilung auf die Achsen eines Kraftfahrzeugs mit ABS-Druckmittelbremse nach der Gattung des Anspruchs 1.

In herkömmlichen Bremssystemen für Nutzfahrzeuge wird zur bremsdynamisch optimalen Ausnutzung der Bremsanlage und insbesondere auch zur Berücksichtigung großer Achslastunterschiede zwischen leerem und beladenem Fahrzeug in der Regel eine automatisch sich lastanpassende Bremse (ALB) vorgesehen.

Die Aufgabe solcher Systeme ist es - entsprechend der niedrigeren Achslast bei Teilbeladung - die Bremskräfte hauptsächlich an der Hinterachse, unter bestimmten Voraussetzungen aber auch an der Vorderachse, durch lastabhängige Reduktion des vom Bremspedal her eingesteuerten Bremsdruckes zu beeinflussen und damit vor allem der von überbremsten Hinterachsen herrührenden Schleudergefahr zu begegnen. Außerdem soll dadurch unabhängig vom Beladungszustand eine bestmögliche Ausnutzung der Bremsanlage erreicht werden. Als ein Maß für die Achslast gebende Eingangsgröße wird bei luftgefederten Fahrzeugen z.B. der Balgdruck, bei stahlgefederten Fahrzeugen in der Regel der - über ein Gestänge übertragene - Achseinfederweg oder das elektrische Signal eines einem Federlager vorgeschalteten, druck- oder zugempfindlichen elektronischen Lastgebers verwendet. Beispiele sind aus der DE-OS 37 11 175 bekannt.

Die mechanische Beeinflussung achsspezifischer Bremsdruck-Regelventile ist anfällig gegen Beschädigungen im rauhen Betrieb. Dazu ist nachteilig, daß entsprechende Bauelemente auch innerhalb einer Fahrzeugbaureihe in diversen und oft auch konstruktiv nicht einheitlichen Varianten erforderlich sind. Eine auf ein Übertragungsgestänge sich abstützende Lasterfassung ist dazu ungenau (z.B. bei gemeinsamer Bremsdruckregelung der Achsgruppen von Fahrzeugen mit Vor- oder Nachlaufachsen oder bei harter Federung), und verursacht auch beträchtliche Kosten.

Solcherart bislang vorgeschlagene Anlagen bzw. darauf abgewickelte Bremsverfahren basieren ausnahmslos auf Regeleingriffen in eine jeweils laufende Bremsung, im Sinne einer aktuell vorliegenden, aber als unzweckmäßig oder falsch erkannten Bremskraftverteilung. Dabei zielt das Bremsverfahren stets darauf ab, bereits eingetretene Sollabweichungen auszuregeln. Ein entsprechendes Verfahren ist in der DE-OS 38 29 951 offenbart.

Die DE-OS 33 23 402 beschreibt eine Bremsanlage für Kraftfahrzeuge, bei der der Bremspedaldruck hilfskraftunterstützt über Druckleitungen, in welche Druckmodulatoren eingefügt sind, auf die Radbremszylinder übertragbar ist. Sie umfaßt u.a. Sensoren zur Ermittlung des Raddrehverhaltens sowie der Fahrzeuggeschwindigkeit und elektronische Schaltungen zur Verarbeitung und logischen Verknüpfung der Meßwerte sowie zur Erzeugung von Stellsignalen für die Modulatoren. Mittels der Bremsdruckmodulatoren wird sowohl eine Steuerung der Bremskraftverteilung in Abhängigkeit vom Bremsschlupf der Vorderräder als auch eine Bremsschlupfregelung, die das Blockieren der Vorderräder verhindert, durchgeführt.

Die DE-OS 32 26 074 beschreibt eine Bremskraftregelanlage für Kraftfahrzeuge, bei der ein Sollwert der Verzögerung des Kraftfahrzeugs vorgegeben, der Istwert ermittelt und der Bremsdruck nach Maßgabe durch die Abweichung von Soll- und Istwert geregelt wird. Dabei ist auch eine Regelung in Abhängigkeit vom Schlupf zwischen Fahrbahn und Rad vorgesehen.

Aufgabe der Erfindung ist, ein Verfahren zur Bremsdruckverteilung auf die Achsen eines Kraftfahrzeugs mit ABS-Druckmittelbremse anzugeben, welches zu übereinstimmenden Raddrehzahlen und insoweit zu einem gleichmäßigen Heranführen an den Blockierbereich führt. Das Verfahren soll also im Bereich häufiger Abbremsungen, d.h. schon im Anpassungsbremsbereich weit unterhalb des normalen Wirkungsbereichs eines Antiblockiersystems (im folgenden mit ABS abgekürzt) eine Verbesserung vermitteln.

Diese Aufgabe wird bei einem gattungsgemäßen Verfahren mit den kennzeichnenden Eigenschaften des Anspruchs 1 gelöst. Es sieht vor, gleiche Radgeschwindigkeiten durch adaptive Regelung auf zwei Eingriffsebenen zu erreichen, wobei die eine stationär und die andere dynamisch ist.

Demgemäß erfolgt einerseits ein sofortiger dynamischer Eingriff bei ausreichend großen Radgeschwindigkeitsdifferenzen zwischen den Achsen.

Andererseits wird jedem aktuellen Regeleingriff eine adaptive Vorausbestimmung 'richtiger' Bremskraftverteilungen unterlagert. Dazu wird bereits vor einem Auftreten großer Drehzahldifferenzen - in Abhängigkeit von der am Bremspedal angewählten Abbremsungshöhe - die hierfür jeweils zweckmäßige Bremskraftverteilung als Schätzwert ermittelt, abgespeichert und im Bedarfsfall im Zuge nachfolgender dynamischer Bremsanforderungen aktuellen Erfordernissen entsprechend angepaßt, d.h. korrigiert.

Der dynamische Eingriff kann vorteilhaft z.B. nach dem Verfahren gemäß der gattungsbildenden, jedoch nicht vorveröffentlichten DE-OS 38 29 951 geschehen.

Vorteilhafte Weiterbildungen sind nach den rückbezogenen Ansprüchen 2 bis 13 gegeben.

Insgesamt erlaubt das erfindungsgemäße Verfahren, bewährte Signalwege und Geber eines vorhandenen ABS auszunutzen, um eine auch weit unterhalb der Blockiergrenze wirkende, lastabhängige Bremsfunktion zu realisieren. Das erfindungsgemäße Verfahren erlaubt dabei, an der Vorderachse unabhängig von der Bremsdrucksteuerung an der Hinterachse höhere Bremsdrücke als bislang üblich einzusteuern. Durch entsprechende Erweiterung eines entsprechenden Mikroprozessor-Programms eines elektronischen ABS-Reglers lassen sich die mechanischen (oder in elektropneumatischen Bremssystemen die zusätzlichen elektronischen) Rad- oder Achslastsensoren gänzlich einsparen.

Das erfindungsgemäß vorgeschlagene Verfahren erlaubt insgesamt die kostengünstige Optimalausnutzung der Gesamtbremsleistungskapazität eines Bremssystems für Nutzfahrzeuge, bei zusätzlicher Minimierung der Zahl erforderlicher Signalgeber und ihrer notwendigen Verbindungswege zu einem elektronischen Steuergerät. Das Verfahren bewirkt insoweit auch eine deutliche Zuverlässigkeitssteigerung einer entsprechend wirkenden Bremsanlage.

Das erfindungsgemäße Verfahren ist in der Zeichnung veranschaulicht und in der nachfolgenden Beschreibung erläutert. Es zeigen:

| | |
|---|---|
| Figur 1 | die fahrwerkseitigen Bestandteile eines beispielhaften, zur Durchführung des Verfahrens geeigneten Druckluft-Bremssystems; |
| Figur 2a | eine Illustration eines ersten Parameterfeldes zur Ermittlung des Parameters a; |
| Figur 2b | eine Illustration eines zweiten Parameterfeldes zur Ermittlung des Parameters b; |
| Figur 2c | eine diagrammatische Illustration zur ersatzweise rechnerischen Bestimmung der Parameter a und b; |
| Figur 3 | ein beispielhaftes Diagramm einer Bremsgröße innerhalb eines Zeitfensters, während dessen dieselbe zum Erkennen eines stabilen stationären Zustandes führt; |
| Figur 4a | den ersten Teil eines Flußdiagrammes des erfindungsgemäßen Verfahrens, den sog. dynamischen Eingriff umfassend; |
| Figur 4b | den zweiten Teil eines Flußdiagrammes des erfindungsgemäßen Verfahrens, die als stationär erkannte Phase und ihre Auswertung betreffend; |
| Figur 4c | ein Flußdiagramm für die ersatzweise Berechnung der Parameter a und b wie in Figur 2c illustriert. |

Zum besseren Verständnis des Verfahrens ist seiner Erläuterung die Beschreibung einer zur Durchführung des Verfahrens geeigneten Bremsanlage vorangestellt.

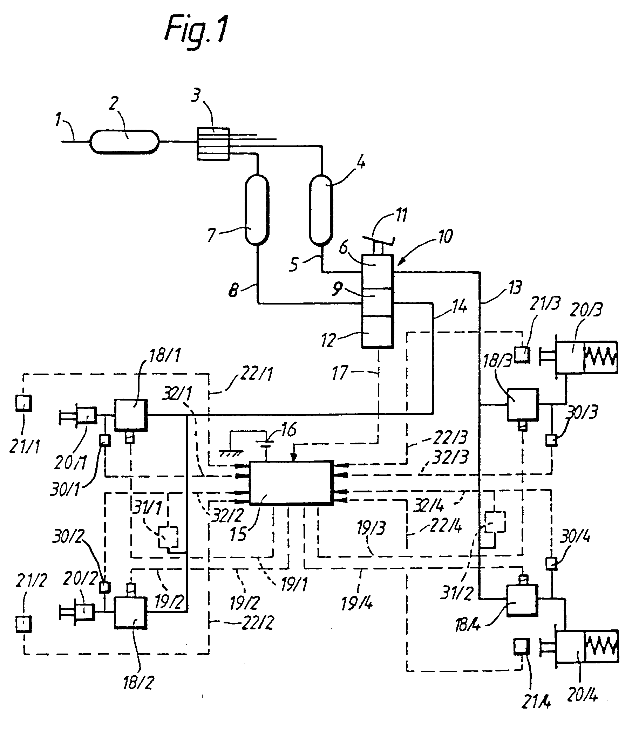

Gemäß **Fig. 1** umfaßt eine solche Bremsanlage Bestandteile, wie sie von hochwertigen elektronischen ABS-Systemen mit Zentralsteuerung und radnahen ABS-Ventilen an sich bereits bekannt sind. Systeme dieser Art verfügen mittels Raddrehbewegungssensoren über die Möglichkeit, mit in Abhängigkeit von Raddrehzahlen gesteuerten Radbremsdrücken das Blockieren einzelner Räder (bei Erreichen der von der Reibpaarung Reifen/Straße bestimmten Kraftschlußgrenze) dadurch zu verhindern, daß der Bremsdruck am entsprechenden Rad so lange reduziert oder zumindest nicht weiter gesteigert wird, als die Blockiertendenz besteht:

Durch eine von einem nicht gezeigten Luftkompressor kommende Speiseleitung 1 wird ein Vorratsbehälter 2 mit Druckmittel versorgt. Über ein Mehrwege-Sicherheitsventil 3 gelangt dieses in Untervorratsbehälter 4 und 7 einer Mehrzahl von Bremskreisen; diese Behälter sind hier beispielhaft einem Vorderachs- und Hinterachsbremskreis des Fahrzeugs zugeordnet. Über Versorgungsleitungen 5 und 8 strömt Druckmittel zu zwei Einzelsektionen 6 und 9 des Betriebsbremsventils 10, welches durch das Pedal 11 betätigt wird. Diesem Ventil oder Pedal zugeordnet ist ein elektrischer Druckaufnehmer bzw. ein Positions- oder Stellungsgeber 12; letzterer ist stellungsschlüssig mit dem Pedal 11 bzw. dem von ihm betätigten Ventilantrieb verbunden und dient zur Erkennung des Fahrerwunsches ($Z_{soll}$). Über ausgangsseitige Betriebsdruckleitungen 13 und 14 versorgen die Sektionen 6 und 9 des Betriebsbremsventils 10 achsnah installierte, elektrisch ansteuerbare Ventile 18/1 und 18/2 bzw. 18/3 und 18/4 zweier verschiedener Achsen mit Druckmittel.

Die Ventile 18/1 bis 18/4 können analog zu ABS-Ventilen ausgebildet sein, wie sie bereits in herkömmlichen Druckluft-Betriebsbremsanlagen mit überlagertem elektronischem ABS Einsatz finden. Vozugsweise kann es sich dabei aber um eine robustere Ausführung mit hoher Standzeit handeln, da diese Ventile in einem gegenüber dem relativ schmalen Blockiergrenzbereich erweiterten Aussteuerbereich wirken sollen und insoweit einer höheren Steuerauslastung unterworfen sind als rein ABS-genutzte Ventile. Insbesondere sind auch elektrisch ansteuerbare Druckmodulatoren an dieser Stelle denkbar.

Den Ventilen 18/1 und 18/2 bzw. 18/3 und 18/4 sind Bremszylinder 20/1 und 20/2 bzw. 20/3 und 20/4 beispielsweise einer Vorder- bzw. Hinterachse des Fahrzeugs zugeordnet. Von einem elektronischen Zentralsteuergerät 15 werden die Ventile über entsprechende Steuerleitungen 19/1 bis 19/4 elektrisch angesteuert. Raddrehzahlsensoren 21/1 bis 21/4 nehmen die Drehzahlen der Räder kontinuierlich auf und geben über entsprechende Leitungen 22/1 bis 22/4 radspezifische Drehzahlsignale an das elektronische Zentralsteuergerät 15 ab, welches aus einem elektrischen Energiespeicher 16 gespeist wird.

Je nach Ausgestaltung der Ventile 18/1 und 18/2 bzw. 18/3 und 18/4 können noch bremszylinderseitige Drucksensoren 30/1 bis 30/4 oder achszugeordnete Drucksensoren 31/1 und 31/2 vorgesehen sein, welche über Empfangsleitungen 32/1 bis 32/4 bzw. 32/2 und 32/4 Drucksignale an das Steuergerät 15 übermitteln.

Bei Ausbildung als ABS-System könnte eine solche Bremsanlage die Funktion einer ALB allenfalls teilweise ersetzen. Ein herkömmliches ABS-System tritt nämlich mit der Wirkung einer lastabhängigen Bremse nur bei Extrembremsungen bzw. sehr ungünstigen und seltenen Straßenverhältnissen überhaupt in Aktion. In der Regel kann ein normales ABS im Bereich häufiger Anpassungsbremsungen mit Verzögerungen unterhalb 2,5 m/s$^2$ die Bremskräfte dem Beladungszustand nicht anpassen.

Dies wird jedoch möglich durch eine softwaremäßige Modifikation eines herkömmlichen elektronisch wirkenden ABS-Systems durch Implementation des erfindungsgemäßen Verfahrens. Es ist in Form eines auf wenige Festwerte und Parameter sowie auf die Raddrehzahlen als Ist-Werte zugreifenden Zusatzprogramms zum eigentlichen ABS-Programm abwickelbar; das Zusatzprogramm beinhaltet auch die erforderlichen Filterfunktionen für Raddrehzahldifferenzen mit wesentlich niedrigerer Grenzfrequenz als jener für ein ABS-Programm.

Das erfindungsgemäß auf einer solchen Bremsanlage demgemäß durchführbare Verfahren hilft der üblicherweise sehr beschränkten ALB-Tauglichkeit eines herkömmlichen elektronischen Zentralsteuergerätes für ein ABS-System ab. Es erschließt insoweit einem softwaremäßig entsprechend modifizierten ABS eine ALB-Funktion auch im Verzögerungsbereich unterhalb 2,5 m/s$^2$ mit der Wirkung, daß Zusatzkomponenten und Installationen am Fahrwerk zur Verwirklichung einer ALB-Funktion verzichtbar werden, ohne daß der wechsellastige Bremskomfort leidet oder auf maximale Bremskapazitätsausnutzung verzichtet werden muß.

Dazu werden Raddrehzahldifferenzen zwischen den Achsen in Kombination mit anderen, ebenfalls aus den Raddrehzahlen abgeleiteten Größen, nämlich mittleren Raddrehzahlen und -verzögerungen, ausgewertet; auf die Ermittlung absoluter Radschlupfe wird also verzichtet.

Stattdessen wird für die Auswertung der von den Radsensoren gelieferten Raddrehzahlsignale jeweils die Überschreitung einer im 'dynamischen' Zweig eher groben zwischenachsigen Raddrehzahldifferenz-Schwelle als Kriterium herangezogen, um bei einer nicht beladungsangepaßten Bremsdruckverteilung eine Abregelung des Bremsdruckes an der betroffenen Achse auszulösen. Im 'stationären' Zweig sind infolge einer zeitlichen Mittelwertbildung auch kleinere Drehzahldifferenzen sehr zuverlässig erkennbar, so daß die erfindungsgemäße Lösung sich besonders hierauf stützt.

Hierzu werden die Raddrehzahlen ermittelt und störende Einflüsse, wie etwa Offsetfehler aus unterschiedlichen Reifendurchmessern, durch dauernden Vergleich der Raddrehzahlen während ungebremster Fahrt mittels einer Software-Normalisierungsroutine kompensiert; die entstörten und auf die mittlere Geschwindigkeit der Vorderräder $v_{mv}$ bezogenen Drehzahldifferenzen entsprechen dann in erster Näherung tatsächlichen Schlupfdifferenzen.

Da die Reifenschlupf-Kennlinien aufgrund unterschiedlicher Reifeneigenschaften und unterschiedlicher Reifenauslastung Streuungen aufweisen können, wird ein diese Streuungen berücksichtigender Grenzwert für zulässige Abweichungen der zwischenachsigen Raddrehzahlen bei Bremsung festgelegt. Solange dieser Grenzwert nicht überschritten wird, kann eine vorgegebene Bremsdruckverteilung unverändert belassen bleiben; wird dieser Grenzwert überschritten, wird sie in die Überschreitung des Grenzwertes verringerndem Sinne nachgeführt. Wenn also ein solcher Grenzwert somit nur niedrig genug gewählt werden kann, dann wird auch weit unterhalb der Blockiergrenze eine Regelung der Bremsdruckverteilung in einem Schlupfbereich möglich, in dem die weitaus häufigsten (Anpassungs-) Bremsvorgänge liegen und in dem ein normales ABS unwirksam ist.

Erfindungsgemäß werden zur Entlastung der Regeleinrichtung und zur Komfortverbesserung sich ständig wiederholende Regelzyklen anzahlmäßig minimiert, indem während jeder einzelnen Fahrt mit an sich unbekanntem Beladungszustand eine Abspeicherung erfaßter oder auf diese bestimmte Nutzlast bzw. Nutzlastverteilung bezogener Parameter der Bremsdruckverteilung

$$\phi = p_{v(vorn)}/p_{h(hinten)}$$

erfolgt. Die so korrigierten bzw. auf neuestem Stand gehaltenen Parameter der Bremsdruckverteilung werden den nachfolgenden Bremsungen als aktuelle Ausgangswerte zugrundegelegt (kontinuierliche Adaption der Bremsdruckverteilung).

Wegen der gegenüber einer reinen ABS-Funktion geänderten Zielsetzung und Regelcharakteristik ist als Ergänzung einer herkömmlichen elektronischen ABS-Steuerung in der Zentralelektronik 15 eine separate bzw. parallele Auswertung von Drehzahlsignalen für die ALB-Funktion zweckmäßig, da die ABS-Funktion für ein ausreichend schnelles Ansprechverhalten nur eine begrenzte Glättung bzw. Filterung zur Störbefreiung dieser Signale erlaubt, die ALB-Funktion hingegen eine wesentlich niedrigere Grenzfrequenz der Filterung abzuspeichernder Werte erfordert, um auch bei unrunden oder an der Verschleißgrenze laufenden Reifen noch offsetarme Wertvorgaben und damit eine effektive Ausnutzung der ALB-Funktion und ein feinfühliges Ansprechen zu ermöglichen.

Das erfindungsgemäße Verfahren zur raddrehzahlgestützt adaptiven Optimierung zwischenachsiger Bremsdruckverteilungen unterscheidet sich von bisher vorgeschlagenen rein dynamischen Bremsregelungen (Ausregeln von "falschen" Bremsdruckverteilungen) dadurch, daß schon auf der Basis weniger Bremsungen ein besserer Schätzwert der Bremsdruckverteilung prädiktiv ermittelt wird.

Dieser Schätzwert der neuen Bremsdruckverteilung $\phi_N$ kann aus einer vorherigen Bremsung mit bekannter (und in der Regel nicht optimaler) Bremsdruckverteilung $\phi$ bestimmt werden anhand der Beziehung

$$\phi_N = p_{Vorderachse}/p_{Hinterachse} = a + b_*Z_{soll}$$

mit

- $Z_{soll}$ als fahrerwunschabhängiger Bremsverzögerungsvorgabe
und
- a und b als Parameter.

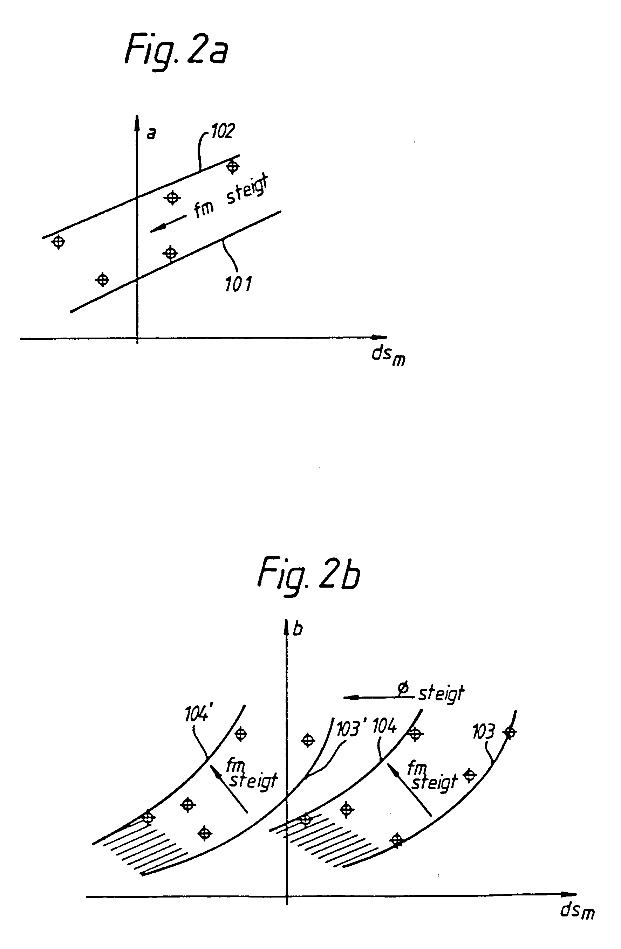

Figur 2a veranschaulicht dazu zunächst ein erstes Parameterfeld zwischen Grenzlinien 101 und 102, aus welchem der Parameter

$$a = (1-f_m)_*a_0$$

mit

- $a_0$ als Basis-/Startwert aus den Daten einer Fahrzeugpalette
und
- $f_m$ als bezogenem Fahrzeugmassenfaktor $m_{aktuell}/m_{beladen}$

oder alternativ

$$a = c_1 + c_{2*}ds_m$$

mit

- $c_1$, $c_2$ als Rechengrößen aus Daten einer Fahrzeugpalette
und
- $ds_m$ als zeitlicher Mittelwert der auf die Vorderachse bezogenen Raddrehzahldifferenz $v_{vorn} - v_{hinten}$ bei definiert konstanter Bremsdruckverteilung $\phi$

ermittelbar ist. Dabei entspricht jeder angedeutete Feldpunkt in Figur 2a jeweils einem ganz bestimmten Fahrzeug.

Figur 2b veranschaulicht ein Parameterfeld, aus welchem in Funktion von $ds_m$ bei einer definierten Bremsdruckverteilung $\phi$ und mit vorerwähntem Fahrzeugmassenfaktor $f_m$ -zwischen Grenzkurven 103 und 104 bzw. bzw. 103' und 104' für das leere bzw. voll beladene Fahrzeug - der Parameter b ermittelbar ist. Gleichermaßen entspricht jeder angedeutete Feldpunkt jeweils einem ganz bestimmten Fahrzeug.

Die Parameter a und b können insoweit mit Algorithmen ermittelt werden, welche aufgrund vorausgegangener Untersuchungen für die Streubänder der Radstände, Schwerpunkthöhen usw. ganzer Fahrzeugfamilien gemeinsam derart festgelegt sind, daß allein bezogene Raddrehzahldifferenzen ds bei bekannter Bremsdruckverteilung und ein aus Druckniveau und erreichter Abbremsung geschätzter Fahrzeugmassenfaktor $f_m$ ohne weitere Sensoren zur Ermittlung von a und b ausreichen. Als Druckniveau ist dabei ein aus Drucksensorsignalen gewichteter Mittelwert zu verstehen. Die Informationen aus zusätzlich etwa vorhandenen Sensoren für Achslasten, Sattellast, Gesamtmasse oder dergleichen können gegebenenfalls zur Verbesserung des Schätzwertes für den Fahrzeugmassenfaktor $f_m$ genutzt werden.

Auf vorteilhafte Weise können die Parameter a und b auch mittels einer einfachen Kurvenapproximation bestimmt werden. Bei dieser verfahrensgemäßen Abwandlung werden aufgrund der Werte und ihres Verhaltens von $ds_m$ und $Z_m$ bei einigen Bremsungen zu Beginn der Fahrt die jeweils maßgebenden Parameter des individuellen Fahrzeugs aufgrund plausibler physikalischer Zusammenhänge erkannt.

Ausgehend von fest gespeicherten, in der Regel nicht optimalen Startwerten $a_0$, $b_0$ ergeben die ersten, als stationär erkannten Bremsvorgänge mit

$$\phi = a_0 + b_{0*}Z_{soll}$$

in der Regel Drehzahldifferenzen $ds_m$, aus deren Zuordnung zur Abbremsung $Z_m$ Korrekturwerte da und db berechnet werden.

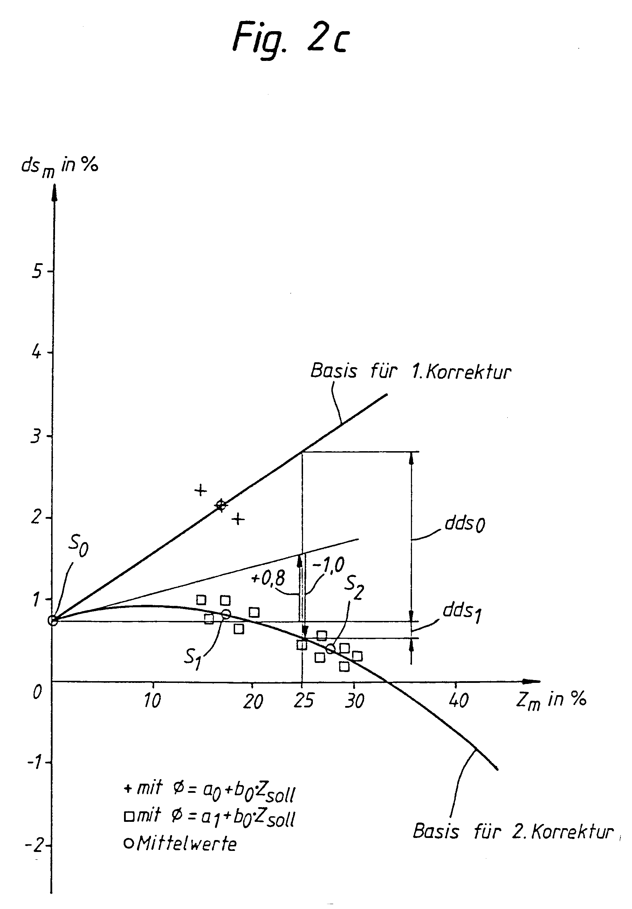

In Figur 2c sind ermittelte Stationärwerte von $ds_m$ als Funktion von zugehörigen Werten $Z_m$ aufgetragen. Der Wert von $ds_m$ bei 0% Abbremsung entspricht dem ungebremsten Zustand unmittelbar vor Einsetzen der Bremsung und wird daher auch als $ds_u$ bezeichnet. Durch das Streufeld der ermittelten Wertepaare $ds_m/Z_m$ und den Punkt $S_0$ (bei $ds_u$) wird eine Näherungsparabel der Form

$$ds = ds_u + a_{p1*} Z + a_{p2*}Z^2$$

gelegt, indem die Wertepaare in zwei Gruppen oberhalb bzw. unterhalb eines Wertes mitten im Bereich häufiger Abbremsungen von $Z_m$ (hier beispielhaft ca. 22,5%) zusammengefaßt werden, durch deren mathematisch elementar ermittelbare Mittelpunkte $S_1$ und $S_2$ zusammen mit $S_0$ eine Parabel eindeutig bestimmt ist.

Für ideale Bremskraftverteilung würde - unabhängig von Z - keine bremskraftbedingte Drehzahldifferenz auftreten, es wäre $ds_m = dS_u$ = konstant. Näherungsweise führt ein zu kleiner Wert von a in der Funktion für $\phi$ (d.h. eine von Z unabhängige Überbremsung der Vorderachse) zu einem mit Z linear zunehmenden $ds_m$, während ein zu kleines b mit steigendem z quadratisch zunehmende $ds_m$ bewirkt. Andererseits entspricht offensichtlich der Optimalwert für a dem Verhältnis der statischen Achslasten, jener für b der dynamischen Achslastverlagerung.

Die in Figur 2c erkennbare, an sich relativ kleine Abweichung von $dds_1$ von ca. 0,2% bei $Z_m$ = 25% Abbremsung nach einer ersten Korrektur von a kommt infolge einer Kompensation des zu kleinen a durch ein zu großes b zustande; bei hohen Abbremsungen würde die Vorderachse stark überbremst sein.

Insoweit geben die Parabelkoeffizienten also an, in welcher Relation da und db zueinander stehen müssen, während die absolute Größe dieser Änderungen auf der Basis der Ergebnisse einer vorausgegangenen ersten Korrektur extrapoliert wird. Insoweit spiegeln die Parabelkoeffizienten also den Fehler der Anfangsbremskraftverteilung bezüglich der statischen und dynamischen Achslasten getrennt wider.

Im Beispiel gemäß Figur 2c wären also da und $db_*Z$ etwa im Verhältnis 0,8 : 1,0 so zu bestimmen, daß bei dem als repräsentativ gewählten $Z_m$ = 25% die Änderung von $\phi_N$ zu ca. 0,2% relativer Änderung von ds führt.

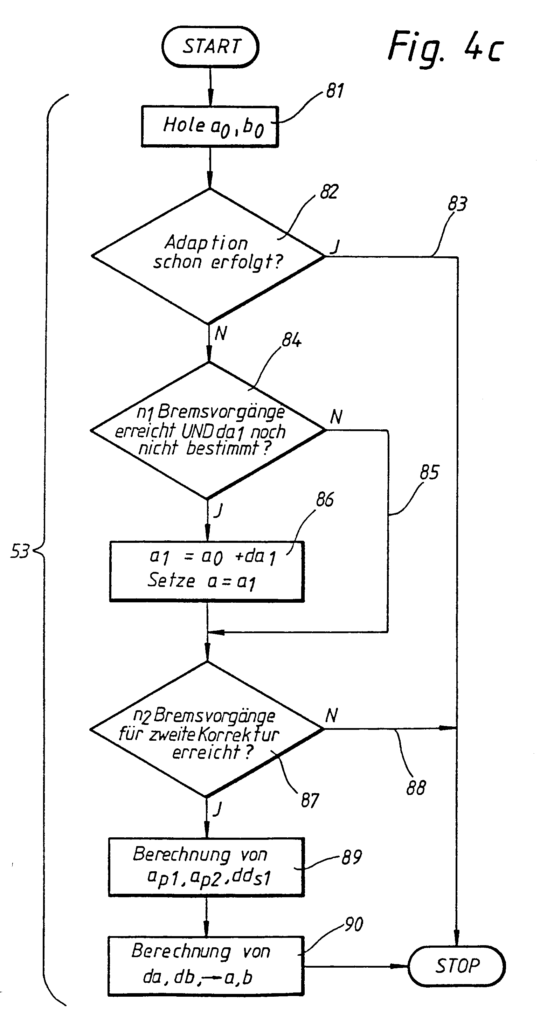

Für eine entsprechende Rechenroutine gilt, daß zunächst nach einer kleinen Anzahl $n_1$ von Bremsungen mit den Anfangswerten $a_0$ und $b_0$ eine grobe Erstkorrektur nur von a durchgeführt wird, letztwelche proportional zu der hierbei ermittelten relativen Drehzahldifferenz $dds_0$ angesetzt wird. Das Ergebnis ist $a_1 = a_0 + da_1$ mit $da_1 = k_*dds_0$; für k werden Werte zwischen 0,2 und 0,5 - etwa der Wert 0,3 - verwendet. Aus einer weiteren Anzahl von Bremsungen mit $\phi_N = a_1 + b_{0*}Z_{soll}$ folgen neue Wertepaare $ds_m$, $Z_m$, durch deren Häufungspunkte $S_1$, $S_2$ dann die Parabel gelegt wird. Aus $a_{p1}$, $a_{p2}$ sowie der Änderung von $dds_0$ auf $dds_1$ beim Übergang von $a_0$ auf $a_1$ sind da und db errechenbar. Der Ablauf einer entsprechenden Routine wird weiter unten anhand Figur 4c erläutert.

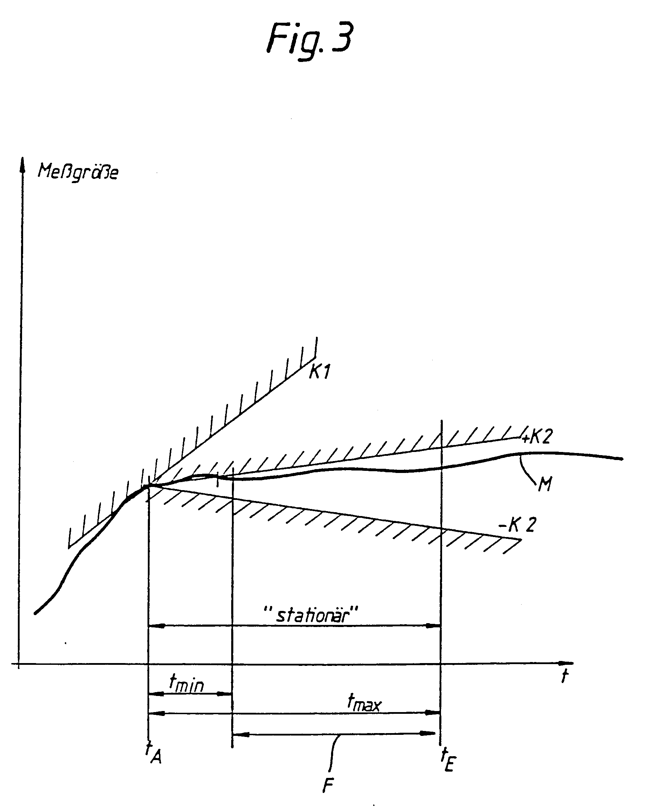

**Figur 3** zeigt das Diagramm einer Bremsgröße M (vom Bremsdruck, der Bremsverzögerung oder Raddrehzahldifferenzen abgeleitet) über der Zeit t innerhalb eines Zeitfensters F zwischen einer Anfangsbeobachtungszeit $t_A$ und einer Endbeobachtungszeit $t_E$; das Zeitfenster beginnt nach Verstreichen einer Minimalzeit $t_{min}$ und endet nach der Maximalzeit $t_{max} = t_E - t_A$. Dabei ist $t_A$ durch das erstmalige Unterschreiten einer Grenzsteilheit $K_1$ definiert.

Vom Zeitpunkt $t_A$ ausgehend wird nach Verstreichen der Minimalzeit $t_{min}$ die Meßgröße M dahingehend untersucht, ob sie im sich anschließenden Zeitfenster F zwischen zwei Grenzgeraden mit (kleineren) Steigungen $K_2$ und $-K_2$ verbleibt, d.h. daß mit letzteren kein Schnittpunkt mehr zustandekommt. Dann und nur dann wird in der Beobachtungszeit $t_E - t_A$ auf Vorliegen einer "stationären Bremsphase" geschlossen, aus welcher die Parameter a und b für die prädiktive Adaption gewonnen werden.

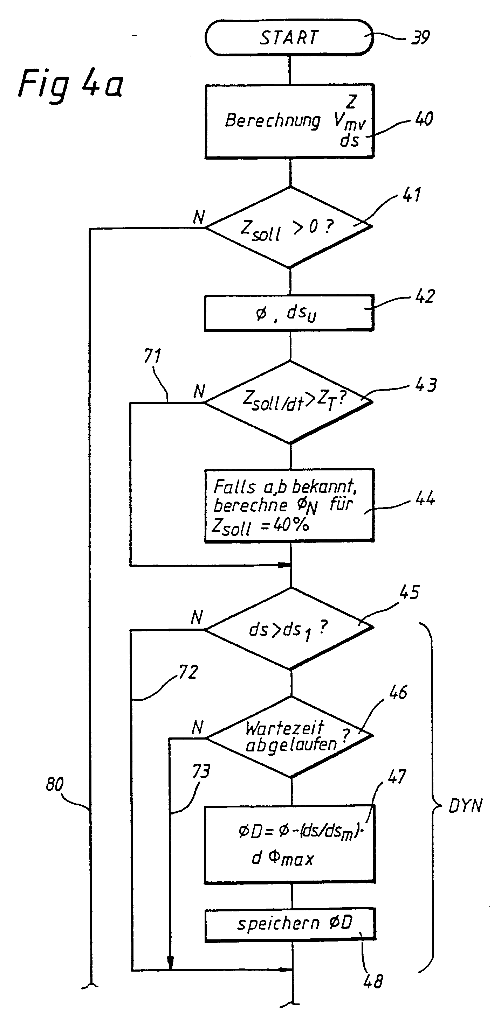

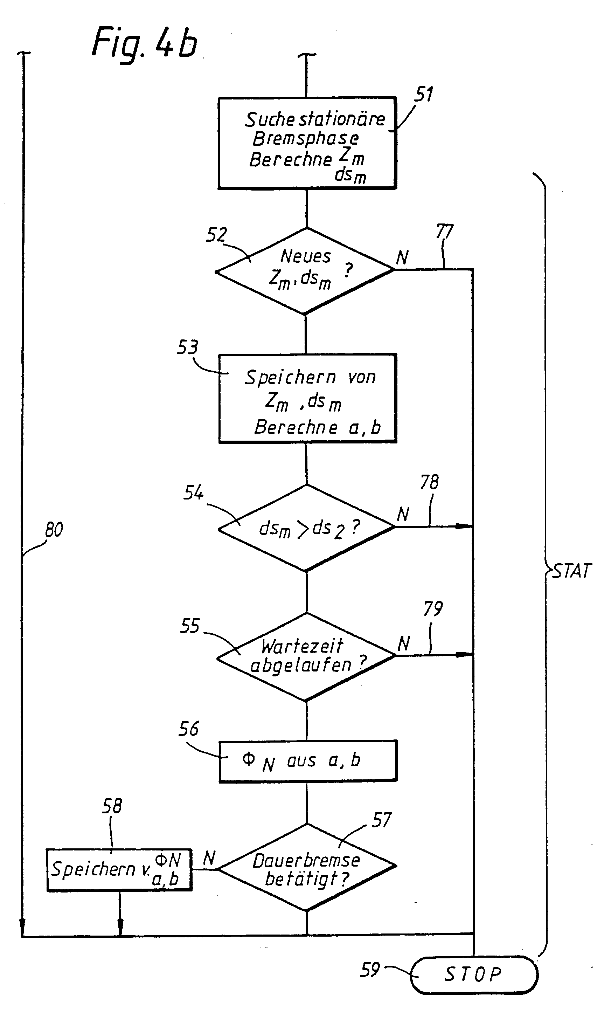

Die **Figuren 4a bis 4c** veranschaulichen anhand von Flußdiagrammen das erfindungsgemäße Bremsverfahren. Die **Figur 4a** umfaßt dabei einen Eingriff in eine laufende Bremsung im Sinne einer dynamischen Regelung, ähnlich der in der DE-OS 38 29 951 beschriebenen. **Figur 4b** beinhaltet die erfindungsgemäße stationäre Prädiktionsroutine STAT. **Figur 4c** veranschaulicht anhand eines Unterflußdiagramms die Ermittlung der Parameter a und b innerhalb der Prädiktionsroutine STAT auf der Grundlage der in Zusammenhang mit Figur 2c beschriebenen Zusammenhänge.

Vom Einschalten des Zündstromkreises zu Fahrtbeginn an wird der in **Figur 4a und 4b** dargestellte Zyklus ständig durchlaufen, nachdem zu Anbeginn ein unveränderlich fest abgespeicherter Startwert für die Bremsdruckverteilung $\phi$ geladen wurde.

Gemäß **Figur 4a** werden dann (in einem unabhängig vom aktuellen Bremszustand alle 10...30 Millisekunden vom Start 39 aus durchlaufenen Zyklus) im Schritt 40 ein Mittelwert $v_{mV}$ der Raddrehzahl der Vorderräder sowie die zeitliche Änderung Z davon und die auf die Vorderachse bezogene Raddrehzahldifferenz ds = $(v_{vorn} - v_{hinten})/v_{mV}$ errechnet, letztere vorzugsweise als gleitender Mittelwert über eine bestimmte Anzahl von Schritten.

Anläßlich Überwachung des Pedalweges bzw. des Pedalbremsdruckes folgt eine Abfrage 41 dahingehend, ob seitens des Fahrers eine Bremsverzögerungsvorgabe $Z_{soll}$ größer als Null vorliegt.

Ist dies der Fall, wird im Schritt 42 als Ausgangsgröße die (alte) Bremsdruckverteilung $\phi$ geladen. Wenn aufgrund vorangegangener Bremsungen dieser Fahrt die Parameter a und b bereits bekannt sind, wird für die aktuelle Bremsanforderung $Z_{soll}$ die 'optimale' Bremsdruckverteilung $\phi_N$ gemäß Beziehung (1) berechnet. Außerdem wird beim ersten Durchlauf des Zyklus während einer Bremsung der aktuelle Wert der auf die Vorderachse bezogenen Raddrehzahldifferenz ds als $ds_u$ gespeichert. $ds_u$ kennzeichnet dabei den ungebremsten Zustand vor Eintreten einer Bremsverzögerung. Ist hingegen $Z_{soll}$ nicht größer als Null, wird über einen Pfad 80 das Zyklusende 59 erreicht.

Dem Schritt 42 folgt eine Abfrage 43 dahingehend, ob eine rasche Pedalbetätigung vorliegt, d.h. ob die zeitliche Änderung von $Z_{soll}$ größer ausfällt als ein Schwellwert $Z_T$ für "rasch". Dazu kann z.B. der Pedalweg erfaßt und abgeleitet werden.

Ist dies der Fall, wird im Schritt 44 eine große zu erwartende Bremsverzögerung unterstellt und vorsorglich eine entsprechende Bremsdruckverteilung $\phi_N$ (z.B. Z = 40%) berechnet und eingesteuert (falls Größen a und b zuvor schon ermittelt wurden). Anschließend wird in einer Abfrage 45 die auf die Vorderachse bezogene Raddrehzahldifferenz ds dahingehend geprüft, ob sie größer als ein Grenzwert $ds_1$ ausfällt.

Fällt im Schritt 43 $Z_{soll}$ nicht größer aus als ein Schwellwert $Z_T$ für "rasch", unterbleibt eine entsprechende Neuberechnung und Einsteuerung gemäß Schritt 44 und die Abfrage 45 erfolgt dann unmittelbar.

Das Abfrageergebnis des Schritts 45 legt fest, ob anschließend die dynamische Eingriffsroutine DYN durchlaufen wird oder nicht. ds kann insbesondere dann größer als ein erster Grenzwert $ds_1$ ausfallen, wenn a und b zuvor noch nicht bestimmt wurden und als Folge davon anfänglich eine zu weit abliegende Bremsdruckverteilung $\phi$ eingesteuert wurde. Ist ds größer als $ds_1$, wird für einen dynamischen Eingriff die Programmroutine DYN durchlaufen, beginnend mit der Abfrage 46.

Bei der Abfrage 46 wird zunächst die seit der letzten Änderung von $\phi$ während dieser Bremsung verstrichene Zeit mit einer Mindestwartezeit verglichen. Dabei ist die Mindestwartezeit so dimensioniert, daß Regelschwingungen vermieden werden.

Ist die Mindestwartezeit abgelaufen, wird im Schritt 47 gemäß der Beziehung $\phi_D = \phi - (ds/dsm) \cdot d\phi_{max}$ eine neue Bremsdruckverteilung berechnet; dabei gilt $\phi_D$ nur für dynamischen Eingriff in die aktuelle Bremsung. Die Größe der Änderung von $\phi$ ist also proportional zu ds, ihre Absolutgröße wird von den maximal möglichen Änderungen dsm und $d\phi_{max}$ bestimmt. Ist die Wartezeit hingegen nicht abgelaufen, unterbleibt gemäß 73 in diesem Zyklus die Routine 47, die Bremsdruckverteilung wird also zunächst nicht geändert.

Im Schritt 48 wird das das gegebenenfalls ermittelte $\phi_D$ als neue Bremsdruckverteilung $\phi$ für die aktuelle Bremsung gespeichert und im nächsten Zyklus verwendet.

Gemäß **Figur 4b** werden auf der Basis gemäß **Figur 3** erkannter stationärer Bremsphasen die Parameter a und b der Bestimmungsgleichung für $\phi_N$

errechnet und damit die Voraussetzung dafür geschaffen, daß künftig bei jeder weiteren Bremsung während dieser Fahrt von vornherein eine wenigstens näherungsweise 'richtige' Bremsdruckverteilung zu dem jeweils vorgegebenen Abbremsungswunsch $Z_{soll}$ eingesteuert werden kann.

Hierzu wird im Schritt 51 zunächst gemäß Figur 3 kontinuierlich nach stationären Bremsphasen gesucht. Am Ende einer stationären Bremsphase werden die Mittelwerte $Z_m$ und $ds_m$ der Größen Z und ds über die Dauer dieser Phase berechnet.

Falls die nachfolgende Abfrage 52 ergibt, daß noch keine oder keine neuen stationären Werte $Z_m$, $ds_m$ vorliegen, wird über den Pfad 77 das Zyklusende erreicht. Andernfalls werden im Schritt 53 aus den gespeicherten und gegebenenfalls neu hinzugekommenen stationären Werten a und b berechnet. Die in Figur 2 dargestellten funktionalen Zusammenhänge dieser Größen sind für eine Fahrzeugfamilie im voraus ermittelt worden und in Form fester Gleichungen in der Zentrallogik gespeichert. Diese Speicherung entfällt, wenn a und b mit dem in Figur 2c veranschaulichten Approximationsverfahren ermittelt werden.

In einer nachfolgenden Abfrage 54 wird geprüft, ob der letzte stationäre Wert $ds_m$ noch größer ist als ein zweiter Grenzwert $ds_2$, welcher kleiner ist als der vorerwähnte Grenzwert $ds_1$ für den dynamischen Eingriff gemäß Figur 4a.

Ist dies der Fall, und ist gemäß Abfrage 55 - analog zur Abfrage 46 - wieder eine Mindestwartezeit seit der letzten Änderung der Bremsdruckverteilung verstrichen, wird im Schritt 56 eine neue Bremsdruckverteilung $\phi_N$ auf der Basis von a und b gemäß Figuren 2a und 2b bzw. 2c berechnet. Da die Bremsdrücke von Vorder- und Hinterachse in jedem Zyklus auf der Basis des jeweils gültigen $\phi$-Wertes neu berechnet werden, ist vom folgenden Zyklus an (im Rahmen der Genauigkeit des geschätzten Wertes) die 'richtige' Bremsdruckverteilung vorhanden.

Ist - gemäß Abfrage 54 - $ds_m$ nicht größer als der zulässige Grenzwert oder ist nach Abfrage 55 die Wartezeit noch nicht abgelaufen, wird über den Pfad 78 bzw. 79 das Zyklusende 59 erreicht.

Schließlich wird vor Erreichen des Zyklusendes 59 mit einer Abfrage 57 noch unterschieden, ob zugleich die Dauerbremse (Motorbremse oder Retarder) betätigt ist, weil diese einen eigenen Anteil zur bezogenen Drehzahldifferenz $ds_m$ liefert, der von der Bremsdruckverteilung unabhängig ist. Demzufolge werden die Werte von $\phi_N$, a und b nur bei abgeschalteter Dauerbremse im Schritt 58 gespeichert. Der gesamte Zyklus beginnt nunmehr von neuem mit dem Start 39 und wird während der gesamten Dauer der Fahrt zyklisch wiederholt.

Erfindungsgemäß ist es z.B. auch möglich, die Adaption für $\phi$ gestuft vorzunehmen etwa derge-

stalt, daß dann, wenn der stationäre Wert $ds_m$ der bezogenen zwischenachsigen Drehzahldifferenz ds den Grenzwert $ds_2$ übersteigt, eine Änderung der Bremsdruckverteilung $\phi$ zunächst um einen gewissen Bruchteil (z.B. 2/3) der errechneten $\phi$-Korrektur erfolgt.

Auch kann - je nach Größe der verbliebenen, in folgenden Stationärphasen erkannten Radgeschwindigkeitsdifferenz eine iterative Anpassung der Bremskraftverteilung erfolgen, wobei eine weitere Korrektur aber erst nach einer gewissen Anzahl (z.B. 5...10) Bremsungen mit mindestens z.B. 20 stationären Phasen erfolgt. Kriterium für die genaue Anzahl kann die Streuung der ausgewerteten 'Stationärwerte' sein, wobei ggfs. Werte bei gleichzeitig betätigter Dauerbremse separat behandelt werden. Anschließend können der Fahrzeugbeladungszustand und überhaupt die auf das Fahrzeug einwirkenden Parameter als bekannt vorausgesetzt werden - a und b bleiben in diesem Fall also konstant.

Nun ist gegebenenfalls Verschleißeingriff möglich, unter Inkaufnahme geringer Veränderungen in der Radgeschwindigkeitsdifferenz. Falls - z.B. wegen Absatteln eines Aufliegers - plötzlich die Schwelle für den dynamischen Eingriff $ds_1$ überschritten werden sollte, wird - zusätzlich zu dem nun erfolgten dynamischen Regeleingriff - die anhand Figuren 4a und 4b beschriebene Prozedur neu gestartet.

**Figur 4c** illustriert eine Routine, mittels derer gemäß Figur 2c die jeweiligen Parameter a und b für das individuelle Fahrzeug ermittelbar sind; sie wird z.B. innerhalb des Funktionsblocks 53 in Figur 4b abgewickelt. Nach einer START-Initialisierung werden im Schritt 81 zunächst die fest abgespeicherten Werte $a_0$ und $b_0$ geholt und es wird im Schritt 82 eine Abfrage durchlaufen, ob db schon während der laufenden Fahrt, d.h. für den aktuellen Fahrzeugzustand, ermittelt worden ist. Ist dies der Fall, wird über den Pfad 83 sofort der Ausgang STOP der Routine erreicht.

Ist dies nicht der Fall, so wird nach einer kleinen Anzahl $n_1$ von Bremsungen, die im Schritt 84 abgefragt wird, mit Anfangswerten $a_0$ und $b_0$ im Schritt 86 eine grobe Erstkorrektur $a_1 = a_0 + da_1$ durchgeführt, wobei $da_1 = k*dds_0$ mit beispielhaft $0,2 < k < 0,5$. Wenn $da_1$ schon bestimmt war und die Anzahl bereits erfolgter Bremsungen größer als $n_1$ ist, wird diese Operation auf dem Pfad 85 umgangen.

Im Schritt 87 wird abgefragt, ob die Anzahl schon erfolgter Bremsungen die vorbestimmte Anzahl $n_2$ übersteigt. Ist dies nicht der Fall, werden keine weiteren Berechnungen ausgeführt, vgl. Pfad 88. Anstelle eines festen Wertes von $n_2$ kann als Kriterium für die Berechnung der Parabelkoeffizienten $a_{p1}$, $a_{p2}$ auch eine Auswertung der Streuung der

Stationärwerte von $ds_m$ dienen. Ist die Bedingung 87 erfüllt, werden im Schritt 89 $a_{p1}$, $a_{p2}$ und $dds_1$ berechnet, und im Folgeschritt 90 dann da und db und hieraus a und b ermittelt und der STOP-Status erreicht.

Verfahrensgemäß können die Größen $ds_m$ und $Z_m$ als Mittelwerte von sogenannten stationären Bremsphasen gebildet werden und als Kriterium für das Vorliegen einer solchen "stationären Phase" das Unterschreiten bestimmter Grenzwerte für die zeitliche Änderung dieser Größe dienen.

Um einen gleichmäßigen Belagverschleiß an allen Achsen oder Rädern zu erzielen, ist es weiterhin möglich, nach einer zur Erkennung der 'richtigen' Parameter a und b benötigten Anzahl von Bremsvorgängen für den Rest einer laufenden Fahrt Bremsdruckänderungen gegenüber den aufgrund von a und b bestimmten 'optimalen' Drücken an einzelnen Achsen zuzulassen, um gegebenenfalls erkannte Belagverschleiß-Ungleichgewichte auszugleichen.

Die - vom Maß der Verschleiß-Ungleichheit bestimmte - Größe der Bremsdruckänderung wird von der kontinuierlich weiterlaufenden Überwachung der Drehzahldifferenzen dann insoweit begrenzt, als ein Überschreiten der (höheren) Schwelle $ds_1$ verhindert wird.

Auch kann das ein- oder (in kurzer Folge) mehrmalige Überschreiten des ersten Grenzwertes ($ds_1$) der Bremsdruck-Regelung zum Anlaß genommen werden, die Parameter a und b erneut nach den obengenannten Algorithmen zu bestimmen, und während dieser Phase keine Verschleißregelung zuzulassen. Neben unerwünscht starken 'Verschleißkorrekturen' wird damit auch der Fall von wesentlichen Beladungsänderungen während der Fahrt (z.B. Entladen, Absatteln ohne Motor abschalten) sicher abgedeckt.

Verfahrensgemäß kann noch an die Stelle der aktuell berechneten mittleren Drehzahldifferentz $ds_m$ die Differenz dds dieses Wertes gegenüber einem Wert $ds_u$ (Drehzahldifferenz im ungebremsten Zustand) treten, wobei dieses $ds_u$ in einem unmittelbar vor Eintreten der Bremswirkung liegenden Zeitabschnitt ermittelt wird. Es ist dann dds = ds - $ds_u$. Auf diese Weise können auch die meist nur auf die Hinterachse wirkenden Bremswirkungen vorgeschalteter Dauerbremsen (Motorbremse, Retarder) tendenziell richtig mitberücksichtigt werden.

Dabei kann aufgrund mindestens zweier stationärer Bremsphasen mit unterschiedlichem $\phi$ aber in etwa gleichem Abbremsungsniveau $Z_m$ ein Quotient $q = (p_v - p_h)/dds$ berechnet werden, welcher für weitere Bremsungen während dieser Fahrt die Berechnung eines $\{Delta\ p\} = ds_u*q$ ermöglicht, mit dem der störende Dauerbremseinfluß in etwa kompensierbar ist.

Des weiteren kann verfahrensgemäß der sonst störende Einfluß etwa unterschiedlicher Reifenradien an den Achsen auf $ds_u$ und ds dadurch reduziert werden, daß er während ungebremster Phasen etwa konstanter Geschwindigkeit (insbesondere bereits in den Hochschalt-Pausen beim Anfahren) durch Kreuzvergleich der Radgeschwindigkeiten ermittelt und bei $ds_u$ in Abzug gebracht wird.

Verfahrensgemäß ergeben sich weitere Vorteile, wenn eine Verwendung der berechneten Soll-Druckverteilung als Basis-Druckverteilung in einer elektrisch/elektronisch geregelten Druckmittelbremsanlage getroffen wird.

Die Erfindung umfaßt schließlich, die berechnete Soll-Druckverteilung mittels eines hydraulischen, pneumatischen oder elektrischen Stellgliedes auf ein konventionelles ALB-Regelventil in einer im übrigen konventionellen Bremsanlage einwirken zu lassen um so eine (heute übliche) mechanische ALB-Anlenkung vorzugsweise an der Hinterachse zu ersetzen.

**Patentansprüche**

1. Verfahren zur Bremsdruckverteilung auf die Achsen eines Kraftfahrzeugs mit ABS-Druckmittelbremse, wobei das Fahrzeug mit einem an sich bekannten, elektrisch wirkenden Anti-Blockier-System (ABS) mit elektronischer Zentralsteuerung und achsnahen, elektrisch ansteuerbaren Bremsventilen ausgerüstet ist und bremsbaren Rädern zugeordnete Drehzahlgeber umfaßt, welche als Istwert-Geber der momentanen Raddrehzahl für eine ABS-Regelung dienen, die bei einem Radbremsdruck nahe der Blockiergrenze wirksam ist, und wobei die zwischenachsige Bremsdruckverteilung $\phi = p_{vorn}/p_{hinten}$ nach Maßgabe einer Auswertung der von den Raddrehzahlgebern gelieferten Raddrehzahlsignale in einem Schlupfbereich unterhalb des Bereiches, in dem die ABS-Funktion wirksam wird, automatisch geregelt wird, und wobei als Maßgabe für eine erste Regelung besagter Bremsdruckverteilung $\phi$ die Überschreitung eines ersten vorgebbaren Grenzwertes $ds_1$ durch eine bezogene Differenz ds zwischenachsiger Raddrehzahlen bei Bremsung dient,
   **dadurch gekennzeichnet,**
   - daß, bei Überschreitung des Grenzwertes $ds_1$, in einem ersten Schritt besagte erste Regelung zum Eingriff in individuelle Bremsungen dynamisch im Sinne einer kontinuierlich zyklischen Erfassung und Verarbeitung aktueller Ist-Raddrehzahldifferenzen zur sofortigen Einflußnahme auf die Bremsdruckverteilung $\phi$ noch während des jeweiligen Bremsvorganges vorgenommen wird, und
   - daß in einem zweiten Schritt dieser ersten Regelung eine zweite Regelung in der Art einer adaptiv prädiktiven Vorsteuerung der Bremsdruckverteilung $\phi$ für beliebige Abbremsungshöhen unterlagert wird vermöge folgender weiterer Verfahrensschritte:
     a. Es werden einander zugeordnete Stationärwerte der bezogenen zwischenachsigen Drehzahldifferenz ds und der Abbremsung Z bei der alten Bremsdruckverteilung $\phi = p_{vorn}/p_{hinten}$ gesucht aufgrund vorgegebener Grenzwerte für die zeitliche Änderung dieser Größen;
     b. sobald Stationärwerte ds, Z vorliegen, werden nach wenigstens einer anfänglichen Bremsung die Parameter a und b einer Bremsdruckverteilungsfunktion $\phi = a + b_*Z_{soll}$ bestimmt, worin $Z_{soll}$ die vom Fahrer über das Bremspedal angeforderte Sollverzögerung ist;
     c. diese Bremsdruckverteilung $\phi$ wird den folgenden Bremsvorgängen zugrundegelegt;
     d. sobald nach der Bestimmung von a und b im Laufe einer nachfolgenden Bremsung ein zweiter, kleinerer Grenzwert $ds_2$ durch einen Stationärwert $ds_m$ der bezogenen Drehzahldifferenz überschritten wird, wird der alte Wert von $\phi$ vermittels der besagten ersten Regelung im aktuellen Zyklus auf den neuen Wert $\phi_D$ korrigiert.

2. Verfahren nach Anspruch 1,
   **dadurch gekennzeichnet,**
   - daß eine Vorausberechnung der zwischenachsigen Bremsdruckverteilung $\phi_N$ insbesondere für hohe Abbremsungen, wie etwa Notabbremsungen, auf der Grundlage von Daten aus normal niedrigen Abbremsungen ausgeführt wird.

3. Verfahren nach Anspruch 1,
   **dadurch gekennzeichnet,**
   - daß die Parameter a und b einer optimalen Bremsdruckverteilung $\phi$ aufgrund der Raddrehzahlverläufe bei einer ersten Bremsbetätigung geschätzt und nach weiteren Bremsungen für den Verlauf der weiteren Fahrt festgelegt werden.

4. Verfahren nach Anspruch 1,
   **dadurch gekennzeichnet,**
   - daß die Parameter a und b mittels Algorithmen ermittelt werden, welche aufgrund vorausgegangener Untersuchungen für die Streubänder der Radstände, Schwerpunkthöhen usw. ganzer Fahrzeugfamilien zuvor gemeinsam derart festgelegt worden sind, daß allein bezogene mittlere Raddrehzahldifferenzen $ds_m$ bei bekannter Bremsdruckverteilung und ein aus Druckniveau und erreichter Abbremsung geschätzter Fahrzeugmassenfaktor $f_m$ zur Ermittlung von a und b ausreichen.

5. Verfahren nach Anspruch 1,
   **dadurch gekennzeichnet,**
   - daß die Parameter a und b von fest gespeicherten oder geschätzten Startwerten $a_0$, $b_0$ ausgehend am jeweiligen Fahrzeug individuell bestimmt werden dadurch,
   - daß durch abgespeicherte, zugeordnete Stationärwertepaare $ds_m$, $Z_m$ - aus einigen Bremsungen zu Beginn einer Fahrt - eine Näherungsparabel $ds_m = f(Z_m)$ berechnet wird, wobei die Parabelkoeffizienten $a_{p1}$ und $a_{p2}$ die Relation da/db bestimmen, und
   - daß der Parameter a als $a = a_0 + da$ und der Parameter b als $b = b_0 + db$ ermittelt werden durch Extrapolation aus derjenigen relativen Drehzahländerung $dds_m$, die sich aus einer zu Beginn der Fahrt frühzeitig erfolgten ersten Korrektur von $a_0$ allein ergeben hat.

6. Verfahren nach Anspruch 1,
   **dadurch gekennzeichnet,**
   - daß als Mittelwerte die Größen $ds_m$ und $Z_m$ aus stationären Bremsphasen gebildet werden und
   - daß als Kriterium für das Vorliegen stationärer Bremsphasen das Unterschreiten vorbestimmter Grenzwerte ($K_1$, $K_2$) für die zeitliche Änderung dieser Größen dienen.

7. Verfahren nach wenigstens einem der Ansprüche 1 bis 6,
   **dadurch gekennzeichnet,**
   - daß zwecks Erzielung eines gleichmäßigen Belagverschleißes an allen Achsen oder Rädern nach einer zur Erkennung der 'richtigen' Parameter a und b benötigten Anzahl von Bremsvorgängen für den Rest einer laufenden Fahrt Bremsdruckänderungen gegenüber 'optimalen' Drücken an einzelnen Achsen zugelassen werden, so daß sich gegebenenfalls erkannte Belagverschleiß-Ungleichgewichte ausgleichen.

8. Verfahren nach Ansprüchen 1 und 7,
   **dadurch gekennzeichnet,**
   - daß das ein- oder - in kurzer Folge - mehrmalige Überschreiten des ersten Grenzwertes $ds_1$ der Regelung der Bremsdruckverteilung als Kriterium dafür benutz wird, daß die Parameter a und b erneut bestimmt werden, und während dieser Phase die Verschleißregelung ausgesetzt wird.

9. Verfahren nach wenigstens einem der vorhergehenden Ansprüche,
   **dadurch gekennzeichnet,**
   - daß an die Stelle der aktuell berechneten mittleren Drehzahldifferenz $ds_m$ die Differenz dds dieses Wertes gegenüber der Drehzahldifferenz im ungebremsten Zustand $ds_u$ tritt, und
   - daß der Wert für $ds_u$ in einem unmittelbar vor Eintreten der Bremswirkung liegenden Zeitabschnitt ermittelt wird.

10. Verfahren nach wenigstens einem der vorhergehenden Ansprüche,
    **dadurch gekennzeichnet,**
    - daß aufgrund mindestens zweier stationärer Bremsphasen mit unterschiedlichem $\phi$, aber in etwa gleichem Abbremsungsniveau $Z_m$ ein Quotient $q = (p_v - p_h)/dds$ berechnet wird, welcher für weitere Bremsungen während dieser Fahrt die Berechnung eines $\{Delta\ p\} = ds_u*q$ ermöglicht, und daß unter Verwendung dieses Wertes der störende Dauerbremseinfluß in etwa kompensiert wird.

11. Verfahren nach Anspruch 9,
    **dadurch gekennzeichnet,**
    - daß der sonst störende Einfluß etwa unterschiedlicher Reifenradien an den Achsen auf $ds_u$ und ds dadurch reduziert wird, daß er während ungebremster Phasen etwa konstanter Geschwindigkeit, und insbesondere bereits in den Hochschalt-Pausen beim Anfahren durch Kreuzvergleich der Radgeschwindigkeiten ermittelt und bei $ds_u$ in Abzug gebracht wird.

12. Verfahren nach Anspruch 1,
    **dadurch gekennzeichnet,**
    - daß die berechnete Soll-Bremsdruckverteilung als Basis-Druckverteilung in einer elektrisch/elektronisch geregelten Druckmittelbremsanlage verwendet wird.

**13.** Verfahren nach Anspruch 1,
**dadurch gekennzeichnet,**
- daß die berechnete Soll-Bremsdruckverteilung mittels eines hydraulischen, pneumatischen oder elektrischen Stellgliedes auf ein konventionelles ALB-Regelventil in einer im übrigen konventionellen Bremsanlage einwirkt, um so eine mechanische ALB-Anlenkung vorzugsweise an der Hinterachse zu ersetzen.

**Claims**

**1.** Method of distributing brake pressure to the axles of a motor vehicle with an ABS pressure-medium brake, the vehicle being equipped with an electrically acting anti-lock brake system (ABS), known per se, with electronic centralised control and electrically controllable brake valves near to the axles and comprising speed sensors which are assigned to the brakable wheels and serve as actual-value sensors of the instantaneous wheel speed for an ABS control which is operative at a wheel brake pressure near to the wheel lock limit, and the inter-axle brake-pressure distribution $\phi$ = $p_{front}/p_{rear}$ being regulated automatically in a slip range below the range in which the ABS function is operative in accordance with an evaluation of the wheel-speed signals supplied by the wheel-speed sensors, and the exceeding of a first predeterminable limiting value $ds_1$ by a referred difference ds of inter-axle wheel speeds upon braking serving as the condition for a first regulation of said brake-pressure distribution $\phi$, characterised in that
- when the limiting value $ds_1$ is exceeded, for intervention in individual brake applications the said first regulation is, in a first step, performed dynamically in the sense of a continuously cyclic acquisition and processing of current actual wheel-speed differences for the purpose of immediate influencing of the brake-pressure distribution $\phi$ while the respective braking operation is still underway and
- in a second step, a second regulation in the manner of an adaptively predictive precontrol of the brake-pressure distribution $\phi$ for any retardation levels is made the basis of this first regulation, using the following further method steps:
a. Mutually associated steady-state values of the referred inter-axle speed difference ds and of the retardation Z in the case of the old brake-pressure distribution $\phi$ - $p_{front}/p_{rear}$ are sought on the basis of predetermined limiting values for the time rate of change of these variables;
b. As soon as steady-state values ds, Z are present, then, after at least one initial brake application, the parameters a and b of a brake-pressure distribution function $\phi$ = a + b*$z_{setpoint}$ are determined, in which function $Z_{setpoint}$ is the setpoint deceleration demanded by the driver via the brake pedal;
c. This brake-pressure distribution $\phi$ is taken as the basis for the subsequent braking operations;
d. As soon as, after the determination of a and b in the course of a subsequent brake application, a second, smaller limiting value $ds_2$ is exceeded by a steady-state value $ds_m$ of the referred speed difference, the old value of $\phi$ is corrected to the new value $\phi_D$ by means of the said first regulation in the current cycle.

**2.** Method according to Claim 1, characterised in that
- a precalculation of the inter-axle brake-pressure distribution $\phi_N$, particularly for high retardations, such as for instance emergency retardations, is carried out on the basis of data from normally low retardations.

**3.** Method according to Claim 1, characterised in that
- the parameters a and b of an optimum brake-pressure distribution $\phi$ are estimated on the basis of the wheel-speed curves during a first brake actuation and, after further brake applications, are fixed for the remainder of the journey.

**4.** Method according to Claim 1, characterised in that
- the parameters a and b are determined by means of algorithms which have been established jointly on the basis of preceding investigations on the scatter bands of the wheel bases, heights of the centre of gravity etc. of whole families of vehicles such that, given a known brake-pressure distribution and a vehicle mass factor $f_m$ estimated from the pressure level and the retardation achieved, referred average wheel-speed differences $ds_m$ alone are sufficient for the determination of a and b.

**5.** Method according to Claim 1, characterised in that

- the parameters a and b are determined individually on the particular vehicle, starting from permanently stored or estimated starting values $a_0$, $b_0$, by
- the calculation of an approximation parabola $ds_m = f(Z_m)$ by means of stored, assigned steady-state value pairs $ds_m$, $Z_m$ - from a number of brake applications at the beginning of a journey -, the parabola coefficients $a_{p1}$ and $a_{p2}$ determining the relation da/db, and
- the determination of parameter a as a = $a_0$ + da
  and parameter b as b = $b_0$ + db
  by extrapolation from the relative speed change $dds_m$ which has resulted from an early first correction of $a_0$ alone at the beginning of the journey.

6. Method according to Claim 1, characterised in that
   - the variables $ds_m$ and $Z_m$ from steady-state braking phases are formed as average values and
   - the undershooting of predetermined limiting values ($K_1$, $K_2$) for the time rate of change of these variables serves as the criterion for the presence of steady-state braking phases.

7. Method according to at least one of Claims 1 to 6, characterised in that
   - after a number of braking operations which is required for the identification of the "correct" parameters a and b, brake-pressure changes relative to "optimum" pressures are permitted at individual axles for the rest of a current journey in order to obtain uniform lining wear at all axles or wheels, with the result that any imbalances in lining wear which may have been detected are compensated.

8. Method according to Claims 1 and 7, characterised in that
   - the single or - in rapid succession - multiple exceeding of the first limiting value $ds_1$ of the control of the brake-pressure distribution is used as a criterion for the redetermination of the parameters a and b and the wear regulation is suspended during this phase.

9. Method according to at least one of the preceding claims, characterised in that
   - the currently calculated average speed difference $ds_m$ is replaced by the difference dds of this value with respect to the speed difference in the unbraked condition $ds_u$, and
   - the value for $ds_u$ is determined in a time period immediately prior to the onset of the braking effect.

10. Method according to at least one of the preceding claims, characterised in that
    - a quotient q = $(p_v - p_h)$/dds is calculated on the basis of at least two steady-state braking phases having a different $\phi$ but an approximately equal retardation level $Z_m$, which quotient permits the calculation of a {Delta p} = $ds_v$*q for further brake applications during this journey, and in that the disturbing influence of the sustained brake-action is approximately compensated using this value.

11. Method according to Claim 9, characterised in that
    - the otherwise disturbing influence of possibly different tyre radii at the axles on $ds_u$ and ds is reduced by being determined during unbraked phases of approximately constant speed and, in particular, already in the up-change intervals during starting, by cross-comparison of the wheel speeds, and being subtracted from $ds_u$.

12. Method according to Claim 1, characterised in that
    - the calculated setpoint brake-pressure distribution is used as basic pressure distribution in an electrically/electronically controlled pressure-medium brake system.

13. Method according to Claim 1, characterised in that
    - the calculated setpoint brake-pressure distribution acts by means of a hydraulic, pneumatic or electric actuator on a conventional ALB control valve in an otherwise conventional brake system, in order in this way to replace a mechanical ALB linkage, preferably at the rear axle.

**Revendications**

1. Procédé de répartition de la pression de freinage entre les essieux d'un véhicule automobile comportant un frein à fluide sous pression ABS, selon lequel le véhicule est équipé d'un système d'antiblocage (ABS) connu en soi, qui agit électriquement et comporte une unité de commande centrale électronique et des soupapes de frein proches de l'essieu et pouvant être commandées électriquement, et comporte des capteurs de vitesse de roues associés à des roues pouvant être freinées et qui servent de générateurs de valeur réelle de la vitesse de rotation de roue instantanée pour une régulation ABS, qui agit pour une pression de freinage de roue proche de la limite de blocage, et selon lequel la répartition de la précision de freinage entre essieux $\phi = p_{avant}/p_{arrière}$ est réglée automatiquement en fonction d'une évaluation des signaux de vitesse de rotation de roues, délivrés par les capteurs de vitesse de rotation de roues, dans une zone de glissement au-dessous de la zone, dans laquelle la fonction ABS est active, et selon lequel le dépassement d'une première valeur limite pouvant être prédéterminée $ds_1$ par une différence relative $ds$ des vitesses de rotation de roues entre essieux est utilisé lors du freinage comme condition pour une première régulation de ladite répartition $\phi$ de la pression de freinage, caractérisé en ce

- que, lors du dépassement de la valeur limite $ds_1$, lors d'une première étape, ladite première régulation pour le début de freinages individuels, est exécutée de façon dynamique dans le sens d'une détection et d'un traitement cycliques continus de différences réelles des valeurs de rotation réelles des roues pour une action immédiate sur la répartition $\phi$ de la pression de freinage, encore pendant l'opération respective de freinage, et

- que, lors d'une seconde étape, une seconde régulation est subordonnée à cette première régulation, à la manière d'une commande pilote prédictive selon un mode adaptatif de la répartition $\phi$ de la pression de freinage pour des intensités de freinage quelconques conformément à d'autres étapes opératoires indiquées ci-après :

  a. on recherche des valeurs stationnaires, associées entre elles, de la différence relative de vitesses de rotation $ds$ entre essieux, et du freinage $\phi$ pour l'ancienne répartition de freinage $\phi = P_{avant}/p_{arrière}$, sur la base de valeurs limites prédéterminées pour la variation dans le temps de ces grandeurs ;

  b. dès que des valeurs stationnaires $ds$, $Z$ sont présentes, après au moins un freinage initial, les paramètres a et b d'une fonction de répartition de la pression de freinage $\phi = a + b*Z_{consigne}$ sont déterminées, $Z_{consigne}$ étant la décélération de consigne demandée par le conducteur par l'intermédiaire de la pédale de frein ;

  c. cette répartition $\phi$ de la pression de freinage est prise comme base pour les processus de freinage suivants ;

  d. dès que, après la détermination de a et b, au cours d'un freinage suivant, une seconde valeur limite inférieure $ds_2$ est dépassée par une valeur stationnaire $dsm$ de la différence relative des vitesses de rotation, l'ancienne valeur de $\phi$ est corrigée en fonction de ladite première régulation, pendant le cycle actuel, pour être amenée à la nouvelle valeur $\phi_D$.

2. Procédé selon la revendication 1, caractérisé en ce

- qu'un calcul préalable de la répartition $\phi_N$ de la pression de freinage entre essieux est exécuté notamment pour des freinages intenses, comme par exemple des freinages d'urgence, sur la base de données provenant de freinages normalement faibles.

3. Procédé selon la revendication 1, caractérisé en ce

- que les paramètres a et b d'une répartition optimale $\phi$ de la pression de freinage sont estimés sur la base des allures des vitesses de rotation des roues lors d'un premier actionnement des freins et sont déterminés, après d'autres freinages, pour l'allure de la poursuite du déplacement.

4. Procédé selon la revendication 1, caractérisé en ce

- que les paramètres a et b sont déterminés au moyen d'algorithmes, qui ont été fixés au préalable en commun sur la base d'examens précédents, pour les plages de dispersion des empattements, des hauteurs des centres de gravité, etc... de familles complètes de véhicules, de telle sorte que seules les différences relatives moyennes $dsn$ des vitesses de rotation de roues dans le cas d'une répartition connue de la pression de freinage et un facteur de masse $f_m$ du véhicule, estimé à partir du niveau de pression et du freinage obtenu, soient suffisants pour la détermination de a et b.

5. Procédé selon la revendication 1, caractérisé en ce

- que les paramètres a et b sont déterminés individuellement à partir de valeurs de départ $a_0$, $b_0$ mémorisées de façon fixe ou estimées, sur le véhicule considéré, par le fait
- qu'une parabole d'approximation $ds_m$ = $f(Z_m)$ est calculée au moyen de couples associés et mémorisés de valeurs sta-tionnaires $ds_m$, $Z_m$ - à partir de quelques freinages au début d'un déplacement-, les coefficients $a_{p1}$ et $a_{p2}$ de la parabole déterminant la relation da/db, et
- que le paramètre a est déterminé en tant que $a = a_0 + da$
- et que le paramètre b est déterminé en tant que $b = b_0 + db$ par extrapolation à partir de la variation relative $dds_m$ de la vitesse de rotation, qu'on a obtenue à partir d'une première correction de $a_0$ seul, effectuée de façon précoce au début du déplacement.

6. Procédé selon la revendication 1, caractérisé en ce
   - que les grandeurs $ds_m$ et $Z_m$ sont for-mées en tant que valeurs moyennes à partir de phases stationnaires de freinage, et
   - qu'en tant que critère pour la présence de phases stationnaires de freinage, on utilise le franchissement, par valeurs infé-rieures, de valeurs limites prédétermi-nées ($K_1$, $K_2$) pour la variation dans le temps de ces grandeurs.

7. Procédé selon au moins l'une des revendications 1 à 6, caractérisé en ce
   - qu'en vue d'obtenir une usure uniforme des garnitures sur toits les essieux ou toutes les roues au bout d'un nombre de processus de freinage, qui est nécessaire pour identifier les paramètres a et b "corrects", des variations de la pression de freinage vis-à-vis de pressions "optimales" sont autorisées sur des essieux individuels pour le reste d'un déplacement en cours de sorte que des balourds éventuellement identifiés et dûs à l'usure des garnitures se compensent.

8. Procédé selon les revendications 1 et 7, caractérisé en ce
   - qu'un dépassement unique ou un dépassement multiple - selon une séquence rapide -, par valeurs supérieures, de la première valeur limite $ds_1$ de la régula-tion de la répartition de la pression de freinage est utilisé comme critère du fait que les paramètres a et b sont à nouveau déterminés et que pendant cette phase la régulation de l'usure est interrompue.

9. Procédé selon au moins l'une des revendications précédentes, caractérisé en ce
   - qu'à la place de la différence moyenne actuellement calculée $ds_m$ des vitesses de rotation, on utilise la différence dds de cette valeur par rapport à la différen-ce $ds_u$ des vitesses de rotation à l'état non freiné, et
   - que la valeur de $ds_u$ est déterminée pen-dant un intervalle de temps situé directement avant l'apparition de l'action de freinage.

10. Procédé selon au moins l'une des revendications précédentes, caractérisé en ce
    - que sur la base d'au moins deux phases stationnaires de freinage avec des $\phi$ dif-férents, mais avec à peu près le même niveau de freinage $Z_m$, on calcule un quotient $q = (p_v-p_h)/dds$, qui permet, pour d'autres freinages pendant ce dé-placement, le calcul de {delta p} = $ds_u*q$, et que moyennant l'utilisation de cette valeur, l'influence perturbatrice du freinage permanent est approximativement compensée.

11. Procédé suivant la revendication 9, caractérisé en ce
    - que l'influence par ailleurs perturbatrice de rayons éventuellement différents de pneumatiques au niveau des essieux sur $ds_u$ et ds est réduite par le fait que l'influence est déterminée, pendant des phases sans freinage à vitesse approximativement constante et notamment déjà pendant les pauses entre les marches à régime élevé, lors du démarrage, par une comparaison croisée des vitesses de roues et est déduite dans le cas de $ds_u$.

12. Procédé suivant la revendication 1, caractérisé par le fait
    - que la répartition de consigne calculée de la pression de freinage est utilisée en tant que répartition de base de la pression dans une installation de freinage à fluide sous pression à régulation électrique/électronique.

13. Procédé selon la revendication 1, caractérisé en ce

- que la répartition de consigne calculée de la pression de freinage agit, au moyen d'un élément de réglage hydraulique, pneumatique ou électrique, sur une soupape de régulation ALB classique située dans une installation de freinage par ailleurs classique de manière à remplacer ainsi une liaison ALB mécanique de préférence au niveau de l'essieu arrière.

# Fig.1

# Fig. 2a

# Fig. 2b

# Fig. 2c

# Fig. 3

Fig 4a

START — 39

$$\text{Berechnung } V_{mv}^{Z} \\ ds$$ — 40

N — $Z_{soll} > 0$ ? — 41

$\emptyset , ds_U$ — 42

71 — N — $Z_{soll}/dt > Z_T$ ? — 43

Falls a,b bekannt, berechne $\emptyset_N$ für $Z_{soll} = 40\%$ — 44

N — $ds > ds_1$ ? — 45

72

N — Wartezeit abgelaufen ? — 46

73

$$\emptyset_D = \emptyset - (ds/ds_m) \cdot \\ d \Phi_{max}$$ — 47

speichern $\emptyset_D$

80

DYN

48

# Fig. 4b

Flowchart:

**51** — Suche stationäre Bremsphase, Berechne $Z_m$, $ds_m$

**52** — Neues $Z_m$, $ds_m$ ? → N → **77** → STAT

**53** — Speichern von $Z_m$, $ds_m$, Berechne $a, b$

**54** — $ds_m > ds_2$ ? → N → **78**

**55** — Wartezeit abgelaufen ? → N → **79**

**56** — $\Phi_N$ aus $a, b$

**57** — Dauerbremse betätigt ? → N → **58** — Speichern v. $\Phi_N$, $a, b$

**59** — STOP

**80**

Fig. 4c

START

81 — Hole $a_0, b_0$

82 — Adaption schon erfolgt?  — J — 83

N

84 — $n_1$ Bremsvorgänge erreicht UND $da_1$ noch nicht bestimmt?  — N — 85

J

86 — $a_1 = a_0 + da_1$ / Setze $a = a_1$

53

$n_2$ Bremsvorgänge für zweite Korrektur erreicht?  — N — 88

87

J

89 — Berechnung von $a_{p1}, a_{p2}, dd_{s1}$

90 — Berechnung von $da, db, \rightarrow a, b$

STOP